# EUROPÄISCHE PATENTANMELDUNG

(11) **EP 1 010 933 A1**
(43) Veröffentlichungstag der Anmeldung: **21.06.2000**
(21) Anmeldenummer: 98123868.6
(22) Anmeldetag: 16.12.1998
(51) Int. Cl.: F16L 59/14

(54) **Wärmeisoliertes Leitungsrohr**

(71) Anmelder: BRUGG Rohrsysteme GmbH, D-31515 Wunstorf (DE)
(72) Erfinder: Demuth, Roland, 5400 Ennetbaden (CH); Oeschger, Alfred, 5276 Wil (AG) (CH)

(57) **Zusammenfassung**

Bei einem wärmeisolierten Leitungsrohr, bestehend aus einem Innenrohr, einem im Abstand dazu angeordneten Außenrohr und einer den Raum zwischen dem Innenrohr und dem Außenrohr ausfüllenden Isolationsschicht aus aufgeschäumtem Kunststoff auf der Basis von Polyurethan, sind mindestens vier Rohre (1,2,3,4) innerhalb des Außenrohres (7) angeordnet. Die Rohre (1,2,3,4) sind thermisch gegeneinander isoliert. Zwei Rohre (3,4) weisen den gleichen Durchmesser auf und liegen mit ihrem Mittelpunkt auf einer Achse einander gegenüber.

## Beschreibung

Gegenstand der Erfindung ist ein wärmeisoliertes Leitungsrohr nach dem Oberbegriff des Anspruchs 1.

Aus der DE- 196 29 678 A1 ist ein Verfahren zur Herstellung eines wärmeisolierten Leitungsrohres bekannt, bei dem ein oder mehrere Rohre aus Kunststoff innerhalb eines gemeinsamen Außenrohres angeordnet sind. Der zwischen den Innenrohren und dem Außenrohr befindliche Raum ist mit einem Kunststoffschaum auf Polyurethanbasis ausgefüllt. Dieses für den Transport von Fernwärme vorgesehene Leitungsrohr ist flexibel und kann in großen Längen in einer kontinuierlichen Fertigungsweise hergestellt werden. Insbesondere ist das bekannte Leitungsrohr als sogenannte Hausanschlußleitung gedacht, die ein Gebäude mit der Haupttrasse des Fernwärmenetzes verbindet.

Neben der Versorgung von Gebäuden mit Fernwärme ist es auch bereits bekannt, Gebäude mit Brauchwasser von einer außerhalb der Gebäude befindlichen Zentrale zu versorgen. Hierzu werden bislang wärmeisolierte Leitungsrohre von der Zentrale bzw. von einer Hauptleitung zu den einzelnen Gebäuden verlegt. Dabei ist es erforderlich, eine Vor- und eine sogenannte Zirkulationsleitung zu verlegen.

Der vorliegenden Erfindung liegt die Aufgabe zugrunde, die Versorgung von Gebäuden von einer Zentrale aus wesentlich zu vereinfachen und kostengünstiger zu gestalten.

Diese Aufgabe wird durch die im Kennzeichen des Anspruchs 1 erfaßten Merkmale gelöst.

Durch die Zusammenlegung der beiden Versorgungsleitungen werden eine Reihe von Vorteilen erzielt:
1. Es ist nur einziges Rohr zu verlegen, d. h. die Tiefbaukosten sind wesentlich geringer.
2. Durch den gemeinsamen Mantel und die Wärmedämmschicht sind die Wärmeverluste äußerst gering. Die Oberfläche der erfindungsgemäßen Leitung ist geringer als die Summe der Oberflächen der einzelnen Leitungen beim Stand der Technik.
3. Die Herstellungs- und Transportkosten sind wesentlich niedriger.

Mit besonderem Vorteil sind vier Rohre innerhalb des Außenrohres angeordnet. Dabei liegen die Mittelpunkte der Rohre vorteilhafterweise an den Ecken eines Quadrates. Die für die Fernwärmeversorgung vorgesehenen Rohre weisen den gleichen Durchmesser - sowohl innen als auch außen - auf. Bei den für die Brauchwasserversorgung vorgesehenen Rohren besitzt der Vorlauf bzw. die Zuführleitung einen größeren Durchmesser bzw. Leitungsquerschnitt als die Zirkulationsleitung. Desgleichen sollte die Zuführleitung auch eine größere Wanddicke als die Zirkulationsteitung aufweisen. Wegen der zu erwartenden Temperaturen und auch wegen der höheren Lebenserwartung wird für die Innenrohre vorzugsweise vernetztes Polyethylen verwendet.

Nach einem weiteren Gedanken der Erfindung ist das Außenrohr ein gewelltes Kunststoffrohr.

Das erfindungsgemäße Leitungsrohr ist gut biegbar und läßt sich zu Ringbunden wickeln bzw. auf Transporttrommeln aufwickeln, die ohne große Schwierigkeiten mit einem LKW zum Verwendungsort transportiert werden können.

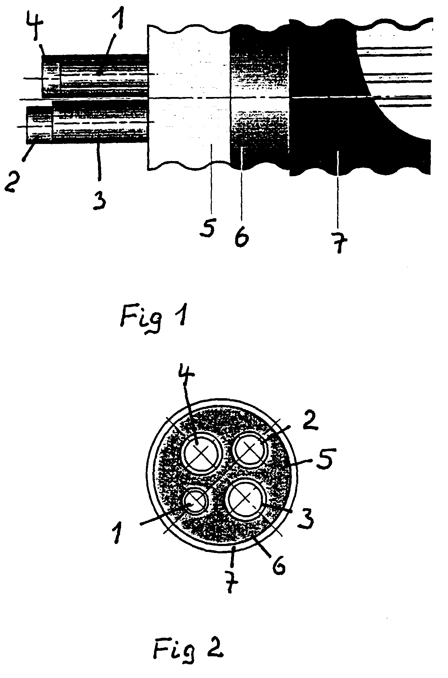

Die Erfindung ist anhand der in den Figuren 1 und 2 schematisch dargestellten Ausführungsbeispiele näher erläutert.

Figur 1 zeigt das erfindungsgemäße Leitungsrohr in einer seitlichen Darstellung , z. T. geschnitten. Vier Innenrohre 1, 2, 3 und 4 sind in einer Wärmedämmschicht 5 aus Polyurethanschaum eingebettet. Die Innenrohre 1, 2, 3 und 4 bestehen aus vernetztem Polyethylen und sind derart in der Wärmedämmschicht 5 angeordnet, daß die Mittelpunkte der Innenrohre 1, 2, 3 und 4 an den Eckpunkten eines Quadrates liegen. An Stelle von Rohren aus vernetztem Polyethylen können auch solche aus normalem Polyethylen (HDPE), Polybuten, aber auch gewellte Metallrohre verwendet werden. Die Wärmedämmschicht 5 ist von einer Kunststoffolie 6 umgeben, auf die ein Kunststoffmantel 7 aufextrudiert ist, der ein Wellprofil aufweist. Sowohl die Kunststoffolie 6 als auch der Kunststoffmantel 7 bestehen aus Polyethylen.

Die Innenrohre 3 und 4 weisen den gleichen Außendurchmesser und den gleichen Querschnitt auf. Im Einsatz dienen die Innenrohre 3 und 4 als Vor- und Rücklaufleitung für erhitztes Wasser einer Fernwärmeheizung. Das Innenrohr 2 dient als Versorgungsleitung von erwärmtem Brauchwasser, wogegen das Innenrohr 1 als Zirkulationsleitung dient damit am Gebrauchsort ständig erwärmtes Brauchwasser verfügbar ist. Der Querschnitt des Innenrohres 1 ist wesentlich geringer als der Querschnitt des Innenrohres 2. Auch die Wanddicke des Innenrohres 1 ist geringer als die des Innenrohres 2. Wegen des zu erwartenden höheren Druckes ist die Wanddicke des Innenrohres 2 höher als die Wanddicke der Innenrohre 3 und 4. Typische Abmessungen des erfindungsgemäßen Leitungsrohres zeigt die nachfolgende Tabelle:

| **Rohr** | **Innenrohr PEX d x s mm** | **Außenrohr D x s mm** | **Minimaler Biegeradius m** |
|---|---|---|---|
| 3 | 25 x 2.3 | 143 x 2.5 | 1.1 |
| 4 | 25 x 2.3 | | |
| 2 | 28 x 4.0 | | |
| 1 | 22 x 3.0 | | |
| 3 | 32 x 2.9 | 143 x 2.5 | 1.1 |
| 4 | 32 x 2.9 | | |
| 2 | 28 x 4.0 | | |
| 1 | 22 x 3.0 | | |
| 3 | 32 x 2.9 | 143 x 2.5 | 1.1 |
| 4 | 32 x 2.9 | | |
| 2 | 28 x 4.0 | | |
| 1 | 22 x 3.0 | | |
| 3 | 40 x 3.7 | 163 x 2.8 | 1.2 |
| 4 | 40 x 3.7 | | |
| 2 | 40 x 5.5 | | |
| 1 | 22 x 3.0 | | |

Der Ringdurchmesser einer zum Ringbund gewickelten Transportlänge beträgt 2.800 mm, der Kerndurchmesser einer Transporttrommel 3.000 mm. Die maximalen Lieferlängen betragen je nach Leitungsgröße zwischen 80 und 210 m.

Der wesentliche Vortel der Erfindung ist darin zu sehen, daß die Wärmeverluste des Leitungsrohres wesentlich geringer sind als bei zwei getrennt verlegten Leitungsrohren für Brauchwasser und Fernwärme. Drüber hinaus sind die Verlegekosten geringer.

## Patentansprüche

1. Wärmeisoliertes Leitungsrohr bestehend aus einem Innenrohr, einem im Abstand dazu angeordneten Außenrohr und einer den Raum zwischen dem Innenrohr und dem Außenrohr ausfüllenden Isolationsschicht aus aufgeschäumtem Kunststoff auf der Basis von Polyurethan, gekennzeichnet durch folgende Merkmale:
a) es sind mindestens vier Rohre (1,2,3,4) innerhalb des Außenrohres (7) angeordnet
b) die Rohre (1,2,3,4) sind thermisch gegeneinander isoliert
c) zwei Rohre (3,4) weisen den gleichen Durchmesser auf und liegen mit ihrem Mittelpunkt auf einer Achse einander gegenüber.

2. Wärmesioliertes Leitungsrohr nach Anspruch 1, dadurch gekennzeichnet, daß bei vier Rohren (1,2,3,4) die beiden Rohre (3,4) gleichen Durchmessers auf einer Achse A liegen, und die Mittelpunkte der beiden anderen Rohre (1,2) auf einer Achse B liegen, die senkrecht zur Achse A verläuft.

3. Wärmeisoliertes Leitungsrohr nach Anspruch 1 oder 2, dadurch gekennzeichnet, daß der Innendurchmesser der beiden Rohre (3,4) mit gleichem Durchmesser größer ist als der Innendurchmesser der beiden anderen Rohre (1,2).

4. Wärmeisoliertes Leitungsrohr nach einem der Ansprüche 1 bis 3, dadurch gekennzeichnet, daß die Rohre (1,2,3,4) aus Kunststoff bestehen.

5. Wärmeisoliertes Leitungsrohr nach Anspruch 4, dadurch gekennzeichnet, daß zumindest eines der Kunststoffrohre (2) eine größere Wanddicke aufweist als die übrigen Kunststoffrohre (1,2,3,4).

6. Wärmeisoliertes Leitungsrohr nach Anspruch 4 oder 5, dadurch gekennzeichnet, daß die Kunststoffinnenrohre (1,2,3,4) aus vernetztem Polyethylen bestehen.

7. Wärmeisoliertes Leitungsrohr nach einem der Ansprüche 1 bis 6, dadurch gekennzeichnet, daß zwischen der Schaumstoffschicht (5) und dem Außenrohr (7) eine Kunststoffolie (6) angeordnet ist.

8. Wärmeisoliertes Leitungsrohr nach einem der Ansprüche 4 bis 7, dadurch gekennzeichnet, daß zwei Kunststoffrohre (3,4) den gleichen Außendurchmesser sowie eine gleiche Wanddicke aufweisen und daß die übrigen Kunststoffrohre (1,2) unterschiedliche Durchmesser und unterschiedliche Wanddicken aufweisen.

9. Wärmeisoliertes Leitungsrohr nach einem der Ansprüche 1 bis 8, dadurch gekennzeichnet, daß das Außenrohr (7) ein gewelltes Kunststoffrohr ist.
